Europäisches Patentamt

European Patent Office

Office européen des brevets

(11) Publication number : **0 339 576 B1**

(12) **EUROPEAN PATENT SPECIFICATION**

(45) Date of publication of patent specification :
28.12.94 Bulletin 94/52

(51) Int. Cl.⁵ : **H02J 7/24**

(21) Application number : **89107475.9**

(22) Date of filing : **25.04.89**

(54) Charging control apparatus for vehicle.

(30) Priority : **26.04.88 JP 103170/88**

(43) Date of publication of application :
**02.11.89 Bulletin 89/44**

(45) Publication of the grant of the patent :
**28.12.94 Bulletin 94/52**

(84) Designated Contracting States :
**DE FR GB IT**

(56) References cited :
**EP-A- 0 009 895**
**EP-A- 0 201 243**
**EP-A- 0 229 482**
**US-A- 4 459 489**
**US-A- 4 590 414**
**US-A- 4 602 205**

(73) Proprietor : **NIPPONDENSO CO., LTD.**
**1-1, Showa-cho**
**Kariya-shi Aichi-ken (JP)**

(72) Inventor : **Kato, Hidetoshi**
**1541, Hanagawacho**
**Suzuka-shi (JP)**
Inventor : **Shibata, Hiroshi**
**Yunion Haitsu Kariya 307**
**105, Taishocho-3-chome**
**Kariya-shi (JP)**
Inventor : **Aoyama, Tooru**
**30-8, Aza-Maruyamagoshi**
**Motojukucho**
**Okazaki-shi (JP)**

(74) Representative : **Pellmann, Hans-Bernd,**
**Dipl.-Ing. et al**
**Patentanwaltsbüro**
**Tiedtke-Bühling-Kinne & Partner**
**Bavariaring 4**
**D-80336 München (DE)**

EP 0 339 576 B1

## Description

This invention relates to a charging control apparatus for a vehicle for controlling the generation of electric power from a vehicle's a.c. generator charging a battery, and more particularly to an apparatus of the kind described above which controls the field current of the generator so as to control the rate of increase in the field current when an electrical load is connected to the generator.

A charging control apparatus for a vehicle is disclosed in document JP-A-59-83600 (corresponding to United States Patent No. 4,459,489). According to the disclosed charging control apparatus, the fact that the output voltage of a vehicle's generator, which is driven by an engine, has dropped to a predetermined level (0.5 V) as a result of connection of a large electrical load to the generator, and, in response to a detection of the voltage drop, the ratio of current having been supplied to the field winding of the generator before the connection of the electrical load is gradually increased. By so gradually increasing the field current of the generator, the load of the generator is gradually applied to the engine, so that the engine can be prevented from vibrating or stalling.

This prior art charging control apparatus requires a first capacitor for detecting the mean conduction rate of the current supplied to the field winding of the generator, and a second capacitor, to which the charge of the first capacitor is transferred when the drop of the output voltage of the generator to the predetermined level is detected. The voltage charged in the second capacitor is discharged through a resistor, and the output of the resistor is compared with a triangular waveform voltage to generate a signal used to gradually increase the current supply ratio up to 100%. The period of time required for gradually increasing the current supply ratio up to 100% is determined by the time constant given by the product of the capacitance of the second capacitor and the resistance of the resistor. Therefore, when a time constant of about several seconds is desired, the required capacitance value of the second capacitor is larger than a predetermined value (about 1 µF). Also, the required capacitance value of the first capacitor is about ten times as large as that of the second capacitor in view of the requirement for transferring the charge of the first capacitor into the second capacitor.

Thus, large capacities are required for the first and second capacitors, resulting in a large size of the charging control apparatus. In other words, ceramic capacitors are required to act as these capacitors, and the first and second capacitors cannot be integrated into a hybrid IC together with other control elements.

Further, the prior art charging control apparatus requires comparing means including a capacitor, a resistor, and a comparator, so as to detect a drop of the output voltage of the generator due to connection of an electrical load, and this results inevitably in a large size of the apparatus.

Moreover, document US-A-4590414 discloses a battery voltage regulating system, wherein a pair of output transistors switching the field current flowing through the field coil of an alternator are switched based on a pulsed difference voltage signal resulting from the comparison of a triangular voltage signal and a voltage signal corresponding to the difference between a generator voltage and a reference voltage. A comparator stage is used to generate a voltage signal, from which the mean conduction ratio can be derived. Upon detection of a variation in the mean conduction ratio, the reference voltage is varied accordingly in order to vary the field coil current conduction ratio so as to compensate for a decreasing generator voltage upon application of an electric load.

Furthermore, document EP-O-009895 discloses a voltage control apparatus for electric generators, wherein, at the start time of an engine, an initial excitation of a generator is executed by supplying an initial exciting current to an exciting coil of the generator. A comparator compares a triangular waveform voltage with a differential voltage determined by the difference between a detected battery charging voltage and a reference voltage and outputs a pulsed voltage signal, which is used for switching a transistor so as to supply current to the exciting coil in order to energize or de-energize the exciting coil. Depending on the differential voltage, the pulsed voltage signal output by the comparator is modified so as to increase or decrease conduction ratio, average exciting coil current and coil excitation at constant periods, resulting in controlling the generator output voltage and, thus, the battery charging voltage to a desired value.

It is an object of the present invention to provide a charging control apparatus for a vehicle in which the conduction rate of current supplied to the field winding of the vehicle's generator can be gradually increased without increasing the size of the apparatus.

In addition thereto, a charging control apparatus for a vehicle shall be provided in which discharge of of the vehicle's battery can be minimized while, at the same time, preventing the engine from vibrating or stalling.

In the following description, terms "conduction rate (turned-on ratio)" and "turned-off ratio" are used to designate the percentages of lengths of time during which a switching element is kept turned on and turned off, respectively, in one period.

The above object is accomplished by a charging control apparatus for a vehicle, comprising a vehicle generator including a stator winding and a field winding adapted to be driven by an engine to generate an output voltage for charging a battery, switching means connected in series with said field winding, mean conduction rate detecting means for detecting the mean conduction rate of said switching means to generate an output signal having a value which is a function of the mean conduction rate of said switching means, and comparing means connected to receive the output voltage of said vehicle generator as a first input signal for comparing said output voltage with a predetermined reference voltage applied to said comparing means as a second input signal, said comparing means being connected to said switching means for applying thereto an output signal for controlling the operation of said switching means, characterized by maximum signal generating means connected to said mean conduction rate detecting means for receiving said output signal therefrom and for outputting a maximum signal which provides a conduction rate of said switching means having a value greater by a predetermined value than the mean conduction rate of said switching means represented by the output signal of said mean conduction rate detecting means, and enable control means connected to said maximum signal generating means to receive the maximum signal therefrom for enabling said comparing means to generate said output signal thereof depending on the value of the maximum signal generated by said maximum signal generating means, thereby causing the conduction rate of said switching means to be increased by said predetermined value.

In the charging control apparatus of the present invention, it is preferable to enable the comparing means again when the value of the output signal of the conduction rate detecting means exceeds a set value.

It is furthermore preferable that the predetermined value in the maximum signal generated from the maximum signal generating means is increased with the increase in the conduction rate detected by the conduction rate detecting means.

Thus, by enabling the comparing means depending on the value of the maximum signal generated from the maximum signal generating means, the conduction rate of the switching means can be gradually increased after it is increased by a predetermined value.

The comparing means is enabled when the value of the output signal of the conduction rate detecting means exceeds its setting. Therefore, the battery can be quickly charged when the conduction rate exceeds the set value.

Also, because the predetermined value in the maximum signal generated from the maximum signal generating means is increased with the increase in the conduction rate detected by the conduction rate detecting means, the battery can be quickly charged according to the conduction rate while decreasing the burden on the engine.

Additionally, by means of the present invention, engine stall which may be caused by an alternator operating as the load of the engine when the revolutions of an engine remain at a low level shall be eliminated.

According to the present invention, this is achieved in that a predetermined increasing conduction rate is detected and the conduction rate of a field-current is controlled gradually.

Further, according to the present invention, a predetermined quantity of the electrical load on operation condition is detected based on the predetermined increasing quantity of the conduction rate. Therefore, a smaller electrical load may be detected as the rotational speed of the engine remains at a low level. Namely, the degree of increase of the conduction rate is large as the rotational speed of the engine remains at a low level when a constant electrical load is maintained. Accordingly, a larger electrical load is detected as the rotation speed of the engine increases to higher level; gradual control will not be needed concerning a smaller electrical load when the revolutions of the engine remain at a high level, therefore it is advantageous and sufficient to charge the battery according to the above results.

Preferred embodiments of the charging control apparatus for a vehicle according to the present invention will now be described in detail with reference to the drawings.

Fig. 1 is an electrical circuit diagram showing the structure of a first embodiment of the charging control apparatus for a vehicle according to the present invention.

Fig. 2 is an electrical circuit diagram of the triangular wave generating circuit provided in the first embodiment shown in Fig. 1.

Fig. 3 is an electrical circuit diagram of the initial exciting circuit provided in the first embodiment shown in Fig. 1.

Figs. 4A, 4B and 4C are waveform diagrams showing voltage waveforms appearing at various parts in Fig. 1.

Fig. 5 shows how the conduction rate changes with time after application of an electrical load in the first embodiment shown in Fig. 1.

Fig. 6 is an electrical circuit diagram showing the structure of a second embodiment of the present invention.

Fig. 7 shows the relation between the mean conduction rate and the relative difference in the second embodiment shown in Fig. 6.

Figs. 8 and 9 are electrical circuit diagrams of a third and a fourth embodiment of the present invention respectively.

Fig. 10 shows the relation between the rotation speed of the engine and output current of the alternator.

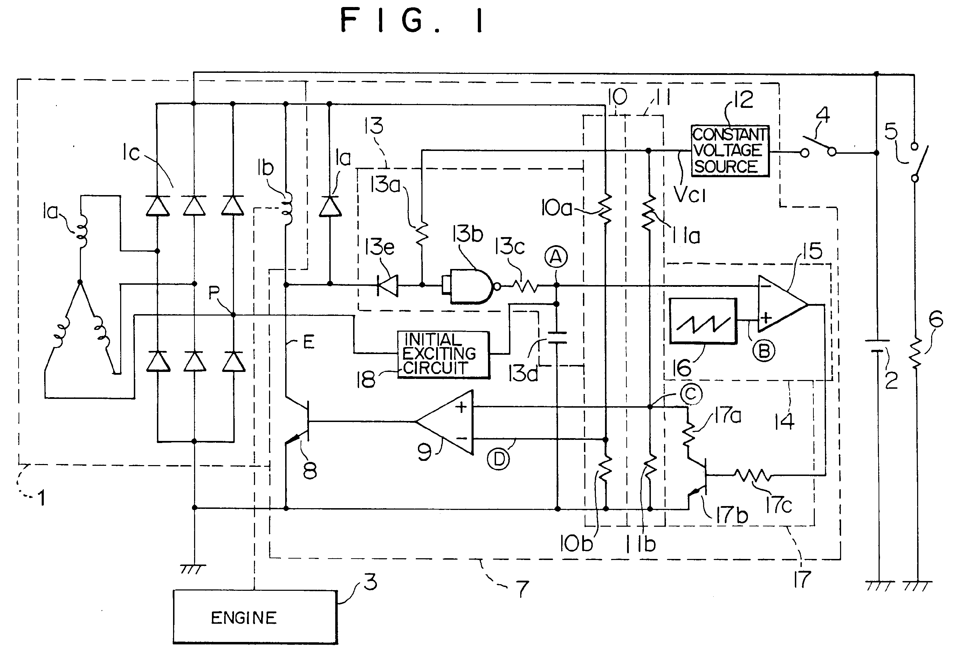

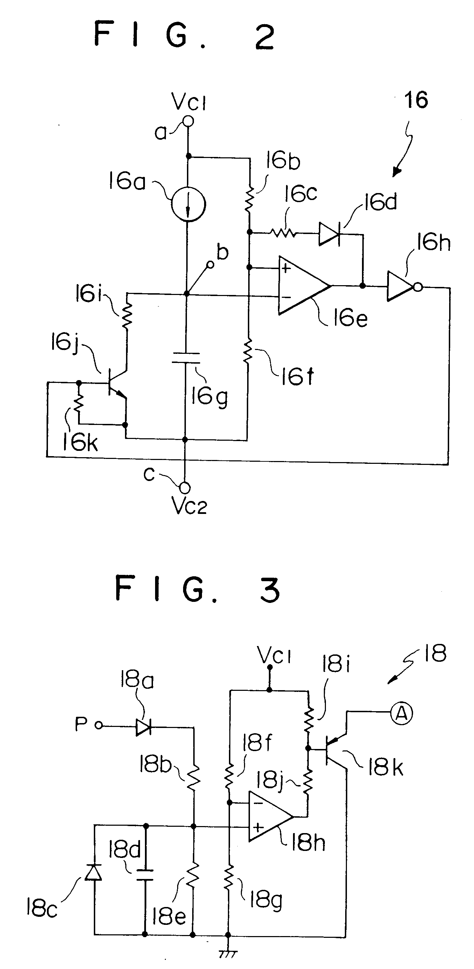

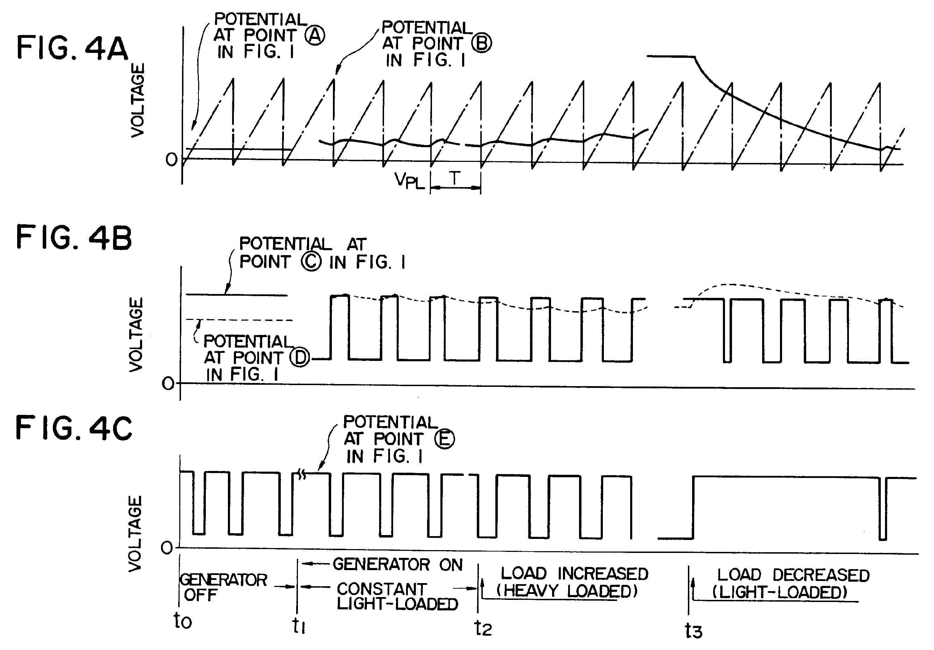

Fig. 1 shows a first embodiment of the present invention. A vehicle's a.c. generator 1 includes three-phase stator windings 1a of Y-connection, a field winding 1b driven by an engine 3, and a full-wave rectifier 1c rectifying an a.c. output voltage appearing across the stator windings 1a. As is well known, the generator 1 is driven at a high speed by the engine 3 through a belt and pulleys (not shown).

A battery 2 is connected at one of its terminals to the full-wave rectifier 1c and to a key switch 4. The battery 2 is grounded at the other terminal. A changeover switch 5 disconnectably connects an electrical load 6 to the battery 2.

A control circuit 7 controls field current supplied to the field winding 1b of the generator 1. Such a control circuit 7 is well known from the disclosures of, for example, United States Patents Nos. 3,538,361 and 4,419,597, and is mounted on the vehicle's a.c. generator 1.

The structure of the control circuit 7 employed in the present invention will now be described in detail. The control circuit 7 includes an output transistor 8 which is a switching means connected in series with the field winding 1b of the generator 1 to control a field current supplied to the field winding 1b. A comparator 9 is a comparing means which is provided for controlling the output transistor 8.

A voltage detection circuit 10 is connected to the full-wave rectifier 1c in the generator 1 to detect the output voltage of the generator 1. This voltage detection circuit 10 includes a first resistor 10a and a second resistor 10b. The connection point Ⓓ between the first and second resistors 10a and 10b is connected to a minus (-) input terminal of the comparator 9.

A constant voltage $V_{c1}$ generated from a constant-voltage regulated power supply 12 is divided by a third resistor 11a and a fourth resistor 11b of a reference voltage circuit 11. The connection point Ⓒ between the third and fourth resistors 11a and 11b is connected to a plus (+) input terminal of the comparator 9.

A mean conduction rate detection circuit 13 is connected between the output transistor 8 and the field winding 1b of the generator 1. This mean conduction rate detection circuit 13 includes a series circuit of a fifth resistor 13a, a NAND gate 13b, a sixth resistor 13c and a capacitor 13d connected between the constant voltage source 12 and ground. The detection circuit 13 also includes a diode 13e connected between the fifth resistor 13a and the connection point between the output transistor 8 and the field winding 1b of the generator 1. When the output transistor 8 is in its on state, a low level appears between the diode 13e and the NAND gate 13b in the mean conduction rate detection circuit 13, and, due to this low level, an output of high level appears at the NAND gate 13b. Therefore, the capacitor 13d is charged through the sixth resistor 13c by the voltage of the constant voltage source 12.

On the other hand, when the output transistor 8 is in its off state, a high level appears between the diode 13e and the NAND gate 13b, and the voltage charged in the capacitor 13d is discharged through the sixth resistor 13c and the NAND gate 13b.

In the mean conduction rate detection circuit 13 of the charging control apparatus shown in Fig. 1, the sixth resistor 13c has a resistance value of about 1 MΩ, the capacitor 13d has a capacitance value of about 0.2 μF, and the time constant of the combination of the sixth resistor 13c and the capacitor 13d is about 200 msec.

Therefore, the voltage charged in the capacitor 13d as a result of charging and discharging the capacitor 13d due to turning on and turning off the output transistor 8 within the period of time of about 200 msec corresponds to the mean conduction rate of the output transistor 8.

A maximum signal generating circuit 14 includes a comparator 15 and a triangular wave generating circuit 16. This comparator 15 is connected at its minus (-) input terminal to the capacitor 13d in the mean conduction rate detection circuit 13 and at its plus (+) input terminal to the triangular wave generating circuit 16.

The triangular wave generating circuit 16 has a structure as shown in Fig. 2. In Fig. 2, a constant current source 16a and a capacitor 16g are connected in series between a terminal $\underline{a}$ connected to the constant voltage source 12 ($V_{c1}$) and a terminal $\underline{c}$ connected to a negative voltage source ($-V_{c2}$). A series connection of a first resistor 16b having a resistance value $R_1$ and a second resistor 16f having a resistance value $R_3$ is connected in parallel with the series connection of the constant current source 16a and the capacitor 16g. A comparator 16e is connected at its plus (+) input terminal to the connection point between the first and second resistors 16b and 16f and at its minus (-) input terminal to the connection point between the constant current source 16a and the capacitor 16g. A third resistor 16c having a resistance value $R_2$ is connected in series with a diode 16d between the output terminal and the plus (+) input terminal of the comparator 16e. A series connection of a transistor 16j and a fourth resistor 16i provided for protecting the transistor 16j is connected in parallel with the capacitor 16g, and an inverter 16h is connected between the base of the transistor 16j and the output terminal of the comparator 16e. The emitter and the base of the transistor 16j are connected by a fifth resistor 16k. Another terminal $\underline{b}$ is connected to the plus (+) input terminal of the comparator 15.

The triangular wave generating circuit 16 generates an output voltage having a triangular waveform as shown in Fig. 4A. This triangular voltage waveform has a maximum value $V_{PH}$, a minimum value $V_{PL}$, and a period T, as follows:

$$V_{PH} = \frac{(V_{c1} - V_{c2}) \cdot R_3}{R_1 + R_3}$$

$$V_{PL} = \frac{(V_{c1} - V_{c2}) \cdot Z_2}{Z_1}$$

$$T = \frac{CV}{i}$$

where $Z_1 = R_1 + \dfrac{R_2 \cdot R_3}{R_2 + R_3}$ and $Z_2 = \dfrac{R_2 \cdot R_3}{R_2 + R_3}$ ; $i$ is the constant current value of the constant current source, C is the capacitance value of the capacitor 16g, and $V = V_{PH} - V_{PL}$.

In the present invention, the minimum value $V_{PL}$ is selected to be 1/10 of the constant voltage $V_{c1}$ for the reason which will be described later. The period T is set at 20 msec.

An enable control circuit 17 in Fig. 1 includes a first resistor 17a and a transistor 17b connected in parallel with the fourth resistor 11b in the reference voltage circuit 11. The transistor 17b is connected at its base to the output terminal of the comparator 15 in the maximum signal generating circuit 14 through a second resistor 17c.

An initial exciting circuit 18 is connected between a terminal P (one phase of the stator windings 1a) and the connection point between the sixth resistor 13c and the capacitor 13d in the mean conduction rate detection circuit 13. This initial exciting circuit 18 has a structure as shown in Fig. 3. In Fig. 3, the initial exciting circuit 18 includes a diode 18a connected to the terminal P to detect the voltage appearing at the terminal P, a first resistor 18b, a second resistor 18e, and a Zener diode 18c and a capacitor 18d connected in parallel with the second resistor 18e. The initial exciting circuit 18 further includes a comparator 18h connected at its minus (-) input terminal to the constant voltage source $V_{c1}$ through a third resistor 18f and at its plus (+) input terminal to the connection point between the first and second resistors 18h and 18e. The comparator 18h is connected at its output terminal to the constant voltage source $V_{c1}$ through a fourth resistor 18i and a fifth resistor 18j connected in series with each other. The initial exciting circuit 18 further includes a NPN transistor 18k connected at its emitter to the connection point Ⓐ between the sixth resistor 13c and the capacitor 13d in the mean conduction rate detection circuit 13, at its base to the connection point between the fourth and fifth resistors 18i and 18j, and at its collector to ground. A diode 19 is connected in parallel with the field winding 1b.

The operation of the charging control apparatus having the structure shown in Fig. 1 will now be described. At the time of turning on the key switch 4, the generator 1 is not in operation yet, and no voltage is applied to the plus (+) input terminal of the comparator 18h in the initial exciting circuit 18 shown in Fig. 3. Therefore, an output of low level appears from the output terminal of the comparator 18h, and the transistor 18k is turned on. As a result, the voltage at the point Ⓐ in the mean conduction rate detection circuit 13 is clamped at a predetermined level determined by the fourth and fifth resistors 18i and 18j in the initial exciting circuit 18.

In Fig. 4A, the predetermined voltage appearing at the point Ⓐ in Fig. 1 is indicated by the solid line, and the voltage generated from the triangular wave generating circuit 16 and appearing at the point Ⓑ in Fig. 1 has a triangular waveform as shown by the one-dot chain lines.

The predetermined voltage appearing at the point Ⓐ is applied to the minus (-) input terminal of the comparator 15 in the maximum signal generating circuit 14, and the triangular waveform voltage appearing at the point Ⓑ is applied to the plus (+) input terminal of the comparator 15. During the period of time in which the level of the predetermined voltage is higher than that of the triangular waveform voltage, an output of low level appears from the output terminal of the comparator 15, and the transistor 17b in the enable control circuit 17 is turned off. When this transistor 17b is turned off, the potential at the point Ⓒ in Fig. 1 increases.

The comparator 9 compares the potential at the point Ⓒ with that at the point Ⓓ in Fig. 1. When the output voltage of the generator 1 exceeds 14.5 V, the comparator 9 generates an output of low level. At the time of turning on the key switch 4, the output voltage of the generator 1 is low, and hence, the battery voltage is low, and the potential at the point Ⓒ is higher than that at the point Ⓓ. Therefore, the comparator 9 generates an output of high level, and the output transistor 8 is turned on. When the output transistor 8 is turned on, current is supplied to the field winding 1b of the generator 1, and the generator 1 starts to generate its a.c. output voltage across the stator windings 1a.

On the other hand, during the period of time in which the level of the predetermined voltage appearing at the point Ⓐ is lower than that of the triangular waveform voltage appearing at the point Ⓑ in Fig. 1, the comparator 15 generates its output of high level, thereby turning on the transistor 17b in the enable control circuit 17. As a result, the potential at the point Ⓒ in Fig. 1 decreases.

In the normal state of the battery 2, the potential at the point Ⓓ in Fig. 1 is higher than that at the point Ⓒ, and the output transistor 8 is turned off through the comparator 9.

Therefore, the output transistor 8 is repeatedly turned on and off depending on the high and low levels of the output of the comparator 15 in the maximum signal generating circuit 14. Commonly, the output transistor 8 is turned on and off to operate with a conduction rate of 20%. That is, in the initial starting stage of the generator 1, the conduction rate is determined on the basis of the predetermined voltage appearing at the point Ⓐ in Fig. 1, that is, the voltage determined by the fourth and fifth resistors 18i and 18j in the initial exciting circuit 18.

While the output transistor 8 is being controlled to operate with the conduction rate of 20%, the output voltage of the generator 1 increases until a voltage exceeding the predetermined value appears at the terminal P. When such a voltage is applied from the terminal P to the initial exciting circuit 18 shown in Fig. 3, the comparator 18h generates its output of high level, thereby turning off the transistor 18k. Therefore, the potential at the point Ⓐ in Fig. 1 is now determined by the potential of the capacitor 13d in the mean conduction rate detection circuit 13 instead of the predetermined voltage determined by the resistors 18i and 18j in the initial exciting circuit 18.

The operation of the charging control apparatus under a constant light-loaded condition between time $t_1$ and time $t_2$ shown in Figs. 4A to 4C will now be described.

It is generally supposed that, when the engine 3 is idling, the conduction rate of the output transistor 8 is stabilized at about 30% in relation to the normal load applied to the battery 2.

When the output transistor 8 is in its on state, the constant voltage source 12 connected to the mean conduction rate detection circuit 13 charges the capacitor 13d through the NAND gate 13b and the sixth resistor 13c. On the other hand, when the output transistor 8 is in its off state, the voltage charged in the capacitor 13d is discharged through the sixth resistor 13c and the NAND gate 13b. Thus, the voltage charged in the capacitor 13d is determined depending on the conduction rate of the output transistor 8. For example, when the conduction rate of the output transistor 8 is 100%, the voltage charged in the capacitor 13d is equal to the power supply voltage $V_{c1}$ of the constant voltage source 12, while when the conduction rate of the output transistor 8 is 0%, no voltage is charged in the capacitor 13d. The voltage charged in the capacitor 13d is applied to the minus (-) input terminal of the comparator 15 in the maximum signal generating circuit 14.

As will be seen in Fig. 4A, the minimum value of the triangular voltage waveform appearing at the point Ⓑ is negative, and, when the voltage charged in the capacitor 13d and appearing at the point Ⓐ is 0 V, the comparator 15 generates its output of low level at a predetermined percentage of about 10%. That is, when the mean conduction rate of the output transistor 8 is 30% as shown in Fig. 4C, the output of the comparator 15 controls the transistor 17b so that the transistor 17b operates with a turned-off ratio of 40% as shown in Fig. 4B.

Therefore, when the potential at the point Ⓒ is in its high level as shown in Fig. 4B, that is, when the transistor 17b is controlled to operate with the turned-off ratio of 40%, the comparator 9 compares the output voltage of the generator 1 with the predetermined voltage level of 14.5 V.

When the apparatus is operating stably, and the transistor 17b is being controlled to operate with the turned-off ratio of 40%, the voltage of the battery 2 decreases to a level lower than 14.5 V for a period of 30%, and the comparator 9 generates its output of high level, thereby turning on the output transistor 8. Thus, the output transistor 8 is controlled to operate with the conduction rate of 30%, and the voltage of the battery 2 is controlled to be maintained at 14.5 V.

The operation of the charging control apparatus from time $t_2$ to time $t_3$ in Figs. 4A to 4C will now be described. At time $t_2$, the electrical load 6 shown in Fig. 1 is connected to the generator 1 by turning on the switch 5 while the apparatus is operating stably as described above.

When the transistor 17b is being controlled to operate with the turned-off ratio of 40% in the stably operating state of the apparatus, and the output transistor 8 is operating with the conduction rate of 30%, the potential at the point Ⓓ in Fig. 1 is higher than that at the point Ⓒ. However, when the electrical load 6 is connected to the generator 1 by turning on the switch 5, the potential at the point Ⓓ is not higher than that at the point Ⓒ as shown in Fig. 4B. While the transistor 17b is in its turned-off state, the comparator 9 generates its output of high level, thereby turning on the output transistor 8.

Thus, the output transistor 8 is now controlled to operate with the conduction rate of 40% in response to the application of the electrical load 6, although it had been controlled to operate with the conduction rate of 30%.

During the transition of the conduction rate of the output transistor 8 from 30% to 40%, the voltage charged in the capacitor in the mean conduction rate detection circuit 13 increases too (the charged voltage increases because the time constant given by the combination of the sixth resistor 13c and the capacitor 13d has the large value of 200 msec.). Due to the increase in the charged voltage of the capacitor 13d, the percentage of the output of low level generated from the comparator 15 increases gradually from 40%. Therefore the turned-off ratio of the transistor 17b turned off in response to the low level output of the comparator 15 increases gradually from 40%, so that both the operable period of time of the comparator 9 and the conduction rate of the output transistor 8 can also be increased.

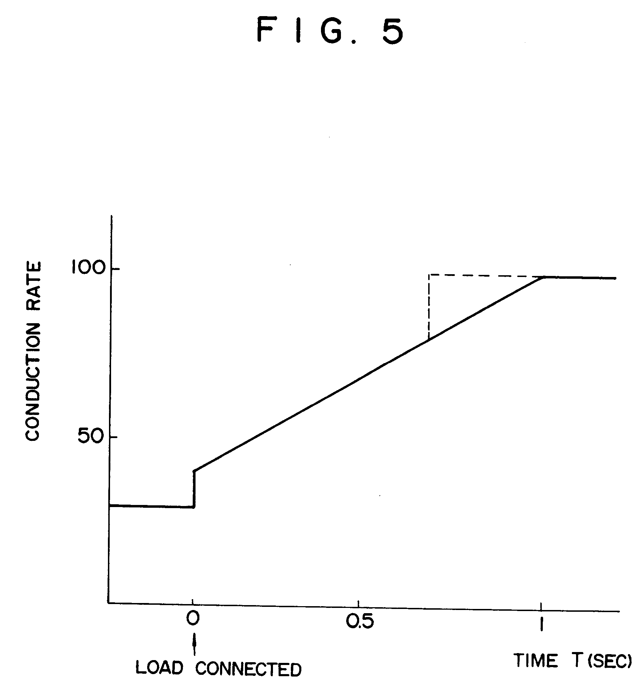

Thus, as shown in Figs. 4C and 5, the conduction rate of the output transistor 8 increases from 30% to 40% when the electrical load 6 is connected to the generator 1 by turning on the switch 5 and then gradually increases up to 100% along the solid curve (In this case, the electrical load 6 is large enough to require the increase in the conduction rate up to 100%.).

In the aforementioned embodiment of the present invention, the conduction rate of the output transistor 8 is gradually increased from 40% to 100% within a period of time of 1 sec.

Suppose that the capacitor 13d in the mean conduction rate detection circuit 13 has a capacitance value of about 0.1 μF, and the time constant of the combination of the sixth resistor 13c and the capacitor 13d is about 1 sec.

In the aforementioned embodiment, the capacitor 13d is repeatedly charged and discharged according to the period of the voltage of triangular waveform generated by the triangular wave generating circuit 16, as shown in Fig. 4A. Therefore, even when the time constant of the combination of the sixth resistor 13c and the capacitor 13d is set at about 1 sec, the conduction rate of the output transistor 8 can be gradually increased from 40% to 100%, and the delay time can be set at about 3 sec.

Therefore, the capacitor 13d can have a small capacitance value of about 0.1 μF. Such a chip capacitor can be integrated in a substrate to form part of a hybrid IC. That is, the control circuit 7 can be integrated into a hybrid IC.

The prior art charging control apparatus includes means for detecting an increase in an electrical load, means (a capacitor) for detecting the current supply ratio of field current, an integrator circuit for gradually increasing the current supply ratio and a pulse width modulation circuit so as to deal with application of the electrical load. In contrast, in the case of the charging control apparatus according to the present embodiment, the mean conduction rate detection circuit 13 (including the sixth resistor 13c and the capacitor 13d) and the maximum signal generating circuit 14 (including the comparator 15 and the triangular wave generating circuit 16) only are required to deal with the application of the electrical load 6, so that the size of the charging control apparatus can be correspondingly decreased.

Therefore, in the aforementioned embodiment, the conduction rate of the output transistor 8 (hence, the field current of the generator 1) is not sharply increased, but gradually increased when the electrical load 6 is connected by turning on the switch 5, so that the electrical load 6 can be gradually applied to the engine 3. Thus, undesirable vibration or stalling of the engine 3 due to abrupt application of the electrical load 6 can be reliably prevented.

The conduction rate of the output transistor 8 may be quickly increased from 30% to 40% when the electrical load 6 is applied. Even in such a case, vibration or stalling of the engine 3 would not occur because the rate of increase in the conduction rate of the output transistor 8 is not large. Further, when the conduction rate of the output transistor 8 is increased by 10% from 30% to 40% as described above, the period of time required to increase the conduction rate up to 100% can be decreased by several ten msec, so that insufficiency of charging the battery 2 can be quickly compensated.

Further, on the basis of the conduction rate detected by the mean conduction rate detection circuit 13, the corresponding output of the maximum signal generating circuit 14 is used to increase, by about 10%, the turned-off ratio of the transistor 17b in the enable control circuit 17. This is advantageous in that a margin can be provided for the conduction rate so as to permit a slight variation of the conduction rate due to, for example, a variation of the rotation speed of the engine 3.

The operation of the charging control apparatus after time $t_3$ in Figs. 4A to 4C will now be described. At this time $t_3$, the electrical load 6 applied at time $t_2$ to cause the increase in the conduction rate of the output transistor 8 is disconnected by turning off the switch 5. When the electrical load 6 is disconnected while the output transistor 8 is being controlled to operate with the turned-off ratio of 100% (that is, while the transistor 17b is being controlled to operate with the turned-off ratio of 100%), the voltage of the battery 2 increases sharply, and, at the same time, the potential at the point Ⓓ in Fig. 1 increases as shown in Fig. 4B. As a result, the comparator 9 generates its output of low level, thereby turning off the output transistor 8. In the state in which the electrical load 6 is disconnected, the output transistor 8 is maintained in its off state until the voltage of the battery 2 drops to a level lower than 14.5 V.

Also, in this first embodiment, the potential at the point Ⓒ is in its low level while the transistor 17b in the enable control circuit 17 is in its on state. It is so arranged that the potential at the point Ⓒ at that time becomes higher than that at the point Ⓓ when the voltage of the battery 2 decreases to a level lower than 12 V.

This voltage setting of 12 V is determined on the basis of a compensation voltage required for compensation of the load connected in parallel with the battery 2 or a voltage level required for preventing a complete depletion of the voltage of the battery 2.

Therefore, in the event that the voltage of the battery 2 drops to a level lower than the setting of 12 V, the output transistor 8 is turned on through the comparator 9 to operate the generator 1, thereby preventing the complete depletion of the voltage of the battery 2.

Further, because the control circuit 7 is mounted on the generator 1, it is exposed to or heated up to a temperature higher than 100°C during operation. Therefore, a prior art digital circuit including an up-/down counter can be hardly used to operate at such a high temperature because a circuit element such as a MOS device in the digital circuit is susceptible to heat. On the other hand, because of the use of bipolar transistors which can operate at a temperature higher than 100°C, the control circuit 7 in the charging control apparatus according to the present embodiment can sufficiently withstand high heat levels.

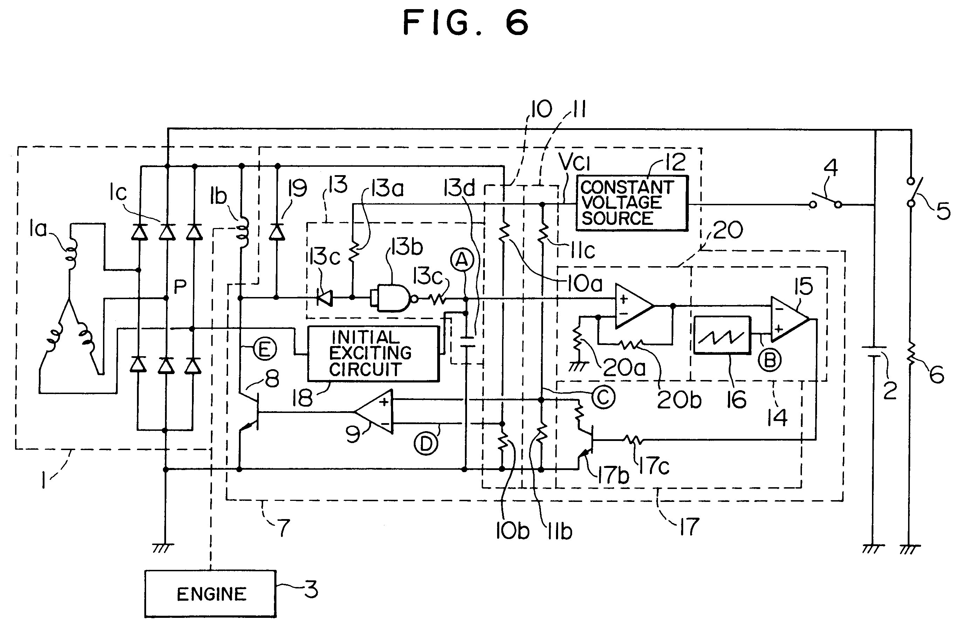

A second embodiment shown in Fig. 6 will next be described. This second embodiment is a modification of the first embodiment shown in Fig. 1, and an amplifier circuit 20 including an operational amplifier and resistors 20a, 20b are connected between the mean conduction rate detection circuit 13 and the maximum signal generator circuit 14 in the first embodiment.

In this amplifier circuit 20, the voltage of the capacitor 13d in the mean conduction rate detection circuit 13 is amplified by the factor of, for example, about 1.3 according to the resistance ratio between the resistors 20a and 20b, and such an amplified voltage is applied to the minus (-) input terminal of the comparator 15 in the maximum signal generator circuit 14.

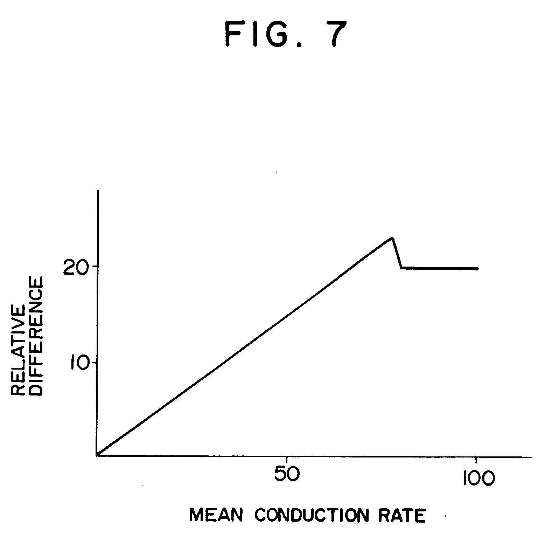

In the second embodiment shown in Fig. 6, the amplifier circuit 20 is provided so that the relative difference between the mean conduction rate of the output transistor 8 detected by the mean conduction rate detection circuit 13 and the conduction rate of the transistor 17b in the enable control circuit 17 increases with the increase in the mean conduction rate as shown in Fig. 7.

Therefore, when the electrical load 6 is connected while the mean conduction rate is small, the rate of rise of the conduction rate shown in Fig. 5 (the relative difference shown in Fig. 7) at the time of the connection of the electrical load 6 is small. On the other hand, when the electrical load 6 is connected while the mean conduction rate is large, the rate of rise of the conduction rate is large.

That is, because the torque of the engine 3 driving the generator 1 is small when the mean conduction rate is small, undesirable vibration of the engine 3 tends to occur when the conduction rate is greatly increased at the small mean conduction rate of the output transistor 8. On the other hand, undesirable vibration of the engine 3 does not occur even when the conduction rate is greatly increased at a large mean conduction rate of the output transistor 8. The above fact has been experimentally confirmed.

Thus, according to the second embodiment, when the mean conduction rate is large, the conduction rate of the output transistor 8 can be greatly increased so that the length of time required for gradually increasing the field current of the generator 1 can be shortened to minimize the voltage drop of the battery 2.

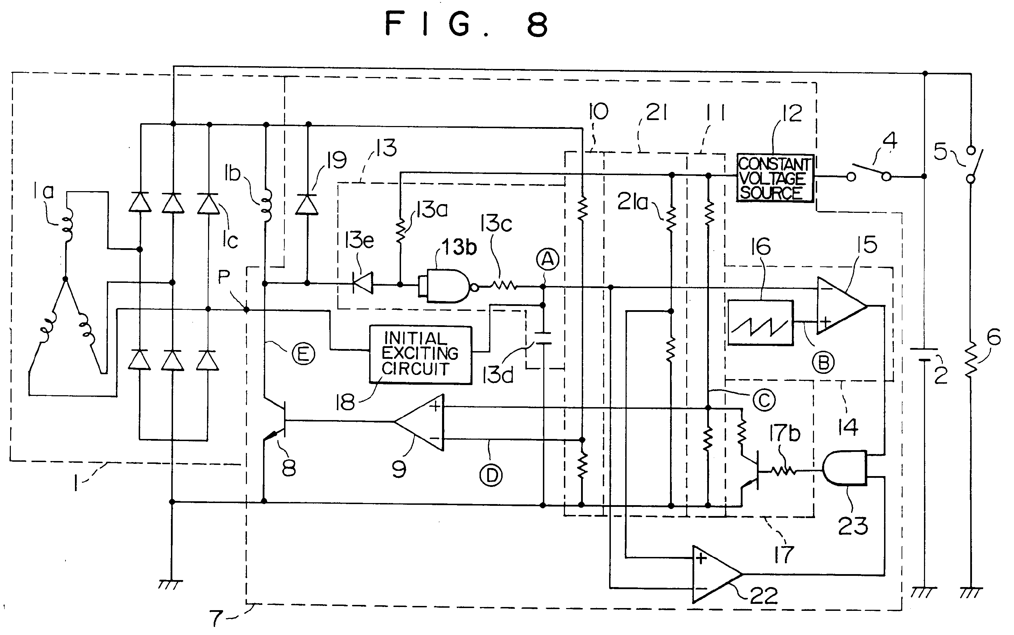

Fig. 8 shows a third embodiment which is another modification of the first embodiment shown in Fig. 1. This third embodiment further includes a control circuit including a second reference voltage circuit 21, a comparator 22, and an AND gate 23 for enabling comparator 9 by restricting the operation of the enabling control circuit 17 when the value of the output signal of the mean conduction rate detection circuit 13 exceeds a preset value. The second reference voltage circuit 21 includes resistors 21a and 21b. The AND gate 23 is connected at one of two input terminals to the output terminal of the comparator 15 in the maximum signal generating circuit 14 and at the other input terminal to the output terminal of the comparator 22.

In this third embodiment, an output signal of low level is generated from the comparator 22 and applied to the AND gate 23 when the mean conduction rate detected by the mean conduction rate detection circuit 13 exceeds 80%. That is, when the mean conduction rate of the output transistor 8 exceeds 80%, the output signal of the AND gate 23 acts to turn off the transistor 17b in the enable control circuit 17.

Therefore, when the electrical load 6 is connected to the generator 1, and the conduction rate of the output transistor 8 increases gradually until the mean conduction rate exceeds 80%, and then the conduction rate of the output transistor 8 increases sharply up to 100%, as shown by the broken curve in Fig. 5. Thus, the length of time required for gradually increasing the conduction rate up to 100% can be shortened, and insufficient charging of the battery 2 can be compensated.

In the third embodiment too, the sharp increase of the mean conduction rate from 80% to 100% as described above does not especially adversely affect the operation of the engine 3 because the torque of the engine 3 is large already.

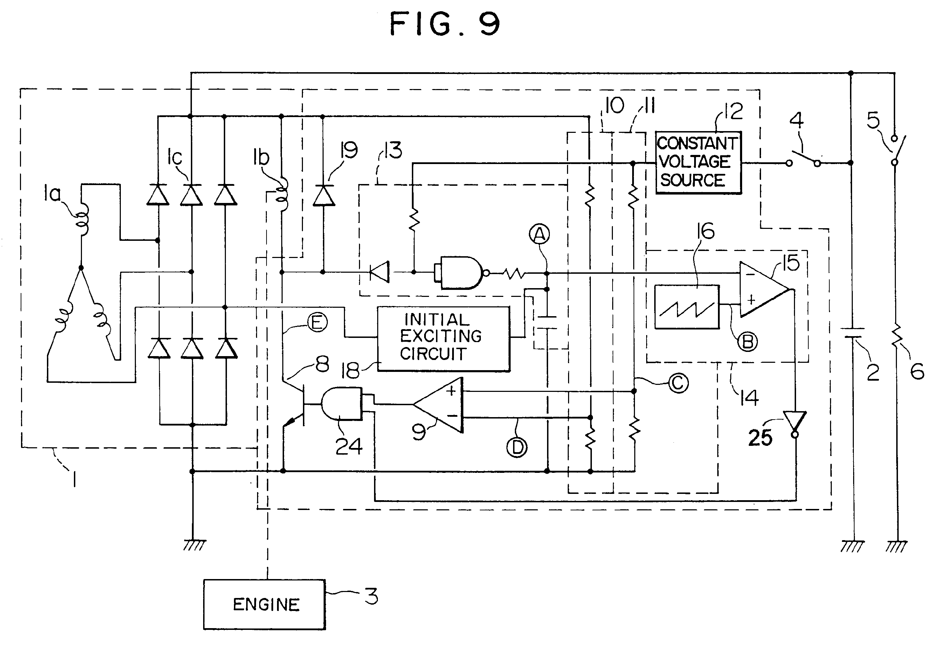

Fig. 9 shows a fourth embodiment of the present invention. This fourth embodiment is also a modification of the first embodiment shown in Fig. 1, and an AND gate 24 is connected between the output transistor 8 and the comparator 9. This AND gate 24 is connected at one of its input terminals to the output terminal of the comparator 9 and at the other input terminal to the output terminal of the maximum signal generating circuit 14 through an inverter 25.

In the aforementioned first, second and third embodiments, the transistor 17b acts to change the potential at the point © depending on the value of the output of the maximum signal generating circuit 14. The fourth embodiment differs from those embodiments in that the output transistor 8 is turned on when both the comparator 9 and the inverter 25 generate output signals of high level.

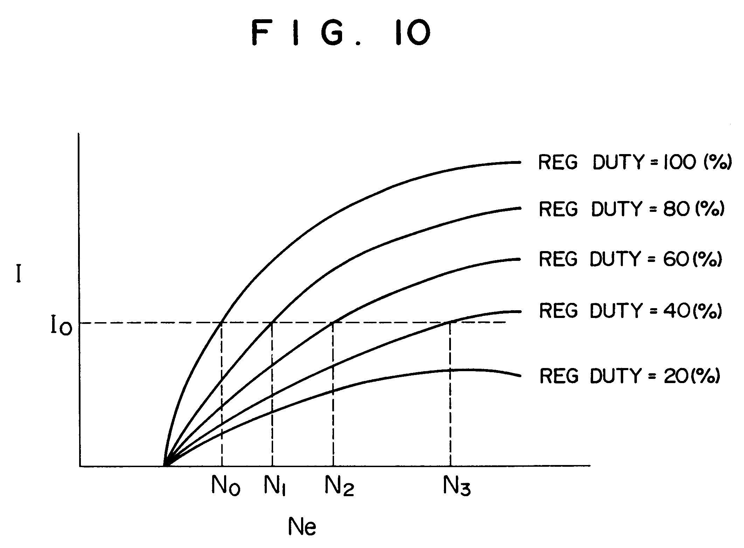

As seen from the aforementioned first, second, third and fourth embodiments, an improved characteristic concerning the relation between the rotational speed of the engine and the output-current of the alternator may be effected. Therefore, stalling of the engine may be eliminated. In Fig. 10, Ne and I denote the rotational speed of the engine and the output current of the alternator, respectively.

When the engine is in a racing condition, the revolutions Ne increase, for example, through $N_0 \rightarrow N_1 \rightarrow N_2 \rightarrow N_3$; then the regulator changes the duty to thereby output a constant output current $I_0$. Next, as the rotational speed of the engine Ne decreases, for example, through $N_3 \rightarrow N_2 \rightarrow N_1 \rightarrow N_0$, the increase of the duty is detected based on the duty in case "Ne = $N_3$", and then the duty is increased gradually after the Δ duty increases. Therefore, the output current of the alternator is less than $I_0$. As a result, an undesirable state of the engine may be eliminated.

**Claims**

1. A charging control apparatus for a vehicle, comprising
   - a vehicle generator (1) including a stator winding (1a) and a field winding (1b) adapted to be driven by an engine (3) to generate an output voltage for charging a battery (2),
   - switching means (8) connected in series with said field winding (1b),
   - mean conduction rate detecting means (13) for detecting the mean conduction rate of said switching means (8) to generate an output signal having a value which is a function of the mean conduction rate of said switching means (8), and
   - comparing means (9) connected to receive the output voltage of said vehicle generator as a first input signal for comparing said output voltage with a predetermined reference voltage applied to said comparing means (9) as a second input signal, said comparing means (9) being connected to said switching means (8) for applying thereto an output signal for controlling the operation of said switching means (8),
   **characterized by**
   - maximum signal generating means (14) connected to said mean conduction rate detecting means (13) for receiving said output signal therefrom and for outputting a maximum signal which provides a conduction rate of said switching means (8) having a value greater by a predetermined value than the mean conduction rate of said switching means (8) represented by the output signal of said mean conduction rate detecting means (13), and
   - enable control means (17) connected to said maximum signal generating means (14) to receive the maximum signal therefrom for enabling said comparing means (9) to generate said output signal thereof depending on the value of the maximum signal generated by said maximum signal generating means (14), thereby causing the conduction rate of said switching means (8) to be increased by said predetermined value.

2. A charging control apparatus according to claim 1, characterized in that said maximum signal generating means (14) includes a comparator (15) receiving the output signal of said mean conduction rate detection means (13) as a first input signal thereto and a triangular waveform output signal of a triangular wave generating circuit (16) as a second input signal thereto.

3. A charging control apparatus according to claim 1, characterized in that said enable control means (17) reduces the predetermined reference voltage applied to said comparing means (9) to a second predetermined voltage while said maximum signal generating means (14) is generating the maximum signal.

4. A charging control apparatus according to claim 1, characterized in that said second predetermined reference voltage is a minimum voltage required for preventing complete consumption of the charged voltage of said battery (2).

5. A charging control apparatus according to claim 2, characterized by further comprising control means (22, 23) for enabling said comparing means (9) by restricting the operation of said enable control means (17) when the value of the output signal of said mean conduction rate detecting means (13) exceeds a preset value.

6. A charging control apparatus according to claim 1 characterized in that said predetermined value in the maximum signal generated by said maximum signal generating means (14) is increased with an increase in the mean conduction rate detected by said mean conduction rate detecting means (13).

7. A charging control apparatus according to claim 1, characterized in that said mean conduction rate detecting means (13) is connected to said switching means (8), and includes a resistor (13c) and a capacitor (13d) repeatedly charged and discharged in response to the on-off state of said switching means (8).

8. A charging control apparatus according to claim 7, characterized in that said maximum signal generating means (14) includes a comparator (15) receiving the voltage of said capacitor (13d) in said mean conduction rate detecting means (13) as a first input signal thereto and a triangular waveform output voltage of a triangular wave generating circuit (16) as a second input signal thereto, and said comparator (15) generates a rectangular waveform output signal having said on-duty ratio larger by the predetermined value than the mean conduction rate of said switching means (8).

**Patentansprüche**

1. Ladesteuervorrichtung für Fahrzeuge mit
   - einem Fahrzeuggenerator (1), der eine Ständerwicklung (1a) und eine Feldwicklung (1b) aufweist, die zum Antrieb durch eine Maschine (3) geeignet ist, um eine Ausgangsspannung zum Laden einer Batterie (2) zu erzeugen,
   - einer Schalteinrichtung (8), die mit der Feldwicklung (1b) in Reihe geschaltet ist,
   - einer Durchschnitts-Zufuhrverhältnis-Erfassungseinrichtung (13) zum Erfassen des Durchschnitts-Zufuhrverhältnisses der Schalteinrichtung (8), um ein Ausgangssignal zu erzeugen, das einen Wert aufweist, der eine Funktion des Durchschnitts-Zufuhrverhältnisses der Schalteinrichtung (8) ist, und
   - einer Vergleichseinrichtung (9), die zum Erhalt der Ausgangsspannung des Fahrzeuggenerators als ein erstes Eingangssignal verschaltet ist, um die Ausgangsspannung mit einer der Vergleichseinrichtung (9) als ein zweites Eingangssignal zugeführten vorbestimmten Bezugsspannung zu vergleichen, wobei die Vergleichseinrichtung (9) mit der Schalteinrichtung (8) verbunden ist, um dieser ein Ausgangssignal zum Steuern der Arbeitsweise der Schalteinrichtung (8) zuzuführen,
   **gekennzeichnet durch**
   - eine Maximalsignal-Erzeugungseinrichtung (14), die mit der Durchschnitts-Zufuhrverhältnis-Erfassungseinrichtung (13) verbunden ist, um deren Ausgangssignal zu empfangen und um ein Maximalsignal auszugeben, das ein Zufuhrverhältnis der Schalteinrichtung (8) mit einem Wert bereitstellt, der um einen vorbestimmten Wert größer als das Durchschnitts-Zufuhrverhältnis der Schalteinrichtung (8) ist, das durch das Ausgangsignal der Durchschnitts-Zufuhrverhältnis-Erfassungseinrichtung (13) repräsentiert wird, und
   - eine Freigabesteuereinrichtung (17), die mit der Maximalsignal-Erzeugungseinrichtung (14) verbunden ist, um deren Maximalsignal zum Freigeben der Vergleichseinrichtung (9) zu empfangen, damit diese ihr Ausgangssignal in Abhängigkeit von dem Wert des Maximalsignals erzeugt, das durch die Maximalsignal-Erzeugungseinrichtung (14) erzeugt wurde, wodurch das Zufuhrverhältnis der Schalteinrichtung (8) um den vorbestimmten Wert erhöht wird.

2. Ladesteuervorrichtung nach Anspruch 1, **dadurch gekennzeichnet**, daß die Maximalsignal-Erzeugungseinrichtung (14) einen Vergleicher (15) umfaßt, der das Ausgangssignal der Durchschnitts-Zufuhrverhältnis-Erfassungseinrichtung (13) als ein erstes Eingangssignal und ein Dreieckswellenform-Ausgangssignal eines Dreieckswellen-Erzeugungsschaltkreises (16) als ein zweites Eingangssignal empfängt.

3. Ladesteuervorrichtung nach Anspruch 1, **dadurch gekennzeichnet**, daß die Freigabesteuereinrichtung (17) die der Vergleichseinrichtung (9) zugeführte vorbestimmte Bezugsspannung auf eine zweite vorbestimmte Spannung erniedrigt, während die Maximalsignal-Erzeugungseinrichtung (14) das Maximalsignal erzeugt.

4. Ladesteuervorrichtung nach Anspruch 1, **dadurch gekennzeichnet**, daß die zweite vorbestimmte Bezugsspannung eine Minimalspannung ist, die zum Verhindern des vollständigen Verbrauchs der geladenen Spannung der Batterie (2) erforderlich ist.

5. Ladesteuervorrichtung nach Anspruch 2, **gekennzeichnet durch** eine Steuereinrichtung (22, 23) zum Freigeben der Vergleichseinrichtung (9) durch Verhindern der Arbeitsweise der Freigabesteuereinrichtung (17), wenn der Wert des Ausgangssignals der Durchschnitts-Zufuhrverhältnis-Erfassungseinrichtung (13) einen voreingestellten Wert übersteigt.

6. Ladesteuervorrichtung nach Anspruch 1, **dadurch gekennzeichnet**, daß der vorbestimmte Wert in dem durch die Maximalsignal-Erzeugungseinrichtung (14) erzeugten Maximalsignal sich mit einer Erhöhung des durch die Durchschnitts-Zufuhrverhältnis-Erfassungseinrichtung (13) erfaßten Durchschnitts-Zufuhrverhältnisses erhöht.

7. Ladesteuervorrichtung nach Anspruch 1, **dadurch gekennzeichnet**, daß die Durchschnitts-Zufuhrverhältnis-Erfassungseinrichtung (13) mit der Schalteinrichtung (8) verbunden ist und einen Widerstand (13c) und einen Kondensator (13d) umfaßt, der wiederholt geladen und entladen wird als Reaktion auf den Ein-/Ausschaltzustand der Schalteinrichtung (8).

8. Ladesteuervorrichtung nach Anspruch 7, **dadurch gekennzeichnet**, daß die Maximalsignal-Erzeugungseinrichtung (14) einen Vergleicher (15) umfaßt, der die Spannung des Kondensators (13d) in der Durchschnitts-Zufuhrverhältnis-Erfassungseinrichtung (13) als ein erstes Eingangssignal und eine Dreieckswellenform-Ausgangsspannung eines Dreieckswellen-Erzeugungschaltkreises (16) als ein zweites Eingangssignal empfängt, und daß der Vergleicher (15) ein Ausgangssignal mit rechteckiger Wellenform erzeugt, das das um den vorbestimmten Wert größere Einschaltverhältnis als das Durchschnitts-Zufuhrverhältnis der Schalteinrichtung (8) aufweist.

## Revendications

1. Dispositif de commande de charge pour véhicule, comprenant:
   - un générateur (1) pour véhicule, comportant un bobinage statorique (1a) et un enroulement inducteur (1b) agencé pour être entraîné par un moteur (3), pour générer une tension de sortie de chargement d'une batterie (2),
   - un moyen de commutation (8) en série avec ledit enroulement inducteur (1b),
   - un moyen de détection (13) de taux moyen de conduction pour détecter le taux moyen de conduction dudit moyen de commutation (8) pour générer un signal de sortie dont la valeur est fonction de la vitesse moyenne de conduction dudit moyen de commutation (8), et
   - un moyen de comparaison (9) connecté pour recevoir la tension de sortie dudit générateur pour véhicule en tant que premier signal d'entrée, pour comparer ladite tension de sortie avec une tension de référence prédéterminée appliquée audit moyen de comparaison (9) en tant que deuxième signal d'entrée, ledit moyen de comparaison (9) étant relié audit moyen de commutation (8) pour appliquer à celui-ci un signal de sortie pour commander le fonctionnement dudit moyen de commutation (8), **caractérisé par**
   - un moyen de génération (14) de signal de maximum, relié audit moyen de détection (13) de taux moyen de conduction pour recevoir de celui-ci ledit signal de sortie et pour produire un signal de maximum qui fournit un taux de conduction dudit moyen de commutation (8) dont la valeur dépasse d'une valeur prédéterminée le taux moyen de conduction dudit moyen de commutation (8) représenté par le signal de sortie dudit moyen de détection (13) de taux moyen de conduction, et
   - un moyen (17) de commande de validation relié audit moyen (14) de génération de signal de maximum pour recevoir de celui-ci le signal de maximum pour autoriser ledit moyen de comparaison (9) à générer son signal de sortie en fonction de la valeur du signal de maximum généré par ledit moyen (14) de génération de signal de maximum, de façon à augmenter le taux de conduction dudit moyen de commutation (8) de ladite valeur prédéterminée.

2. Dispositif de commande de charge selon la revendication 1, caractérisé en ce que ledit moyen (14) de génération de signal de maximum comporte un comparateur (15) recevant comme premier signal d'entrée le signal de sortie dudit moyen de détection (13) de taux moyen de conduction et, comme second signal d'entrée, un signal triangulaire produit par un circuit (16) de génération de signal triangulaire.

3. Dispositif de commande de charge selon la revendication 1, caractérisé en ce que ledit moyen (17) de commande de validation réduit à une seconde tension prédéterminée la tension de référence prédéterminée appliquée audit moyen de comparaison (9) pendant que ledit moyen (14) de génération de signal de maximum génère le signal de maximum.

4. Dispositif de commande de charge selon la revendication 1, caractérisé en ce que ladite seconde tension prédéterminée est une tension minimale nécessaire pour empêcher une consommation complète de la tension chargée de ladite batterie (2).

5. Dispositif de commande de charge selon la revendication 2, caractérisé en ce qu'il comprend en outre un moyen de commande (22, 23) pour valider ledit moyen de comparaison (9) en limitant le fonctionnement dudit moyen (17) de commande de validation lorsque la valeur du signal de sortie dudit moyen de détection (13) de taux moyen de conduction dépasse une valeur préétablie.

6. Dispositif de commande de charge selon la revendication 1, caractérisé en ce que ladite valeur prédéterminée dans le signal de maximum généré par ledit moyen (14) de génération de signal de maximum est augmentée lorsque le taux moyen de conduction détecté par ledit moyen de détection (13) de taux moyen de conduction augmente.

7. Dispositif de commande de charge selon la revendication 1, caractérisé en ce que ledit moyen de détection (13) de taux moyen de conduction est relié audit moyen de commutation (8), et comporte une résistance (13c) et un condensateur (13d) chargé et déchargé d'une manière répétée en réponse à l'état de conduction-non conduction dudit moyen de commutation (8).

8. Dispositif de commande de charge selon la revendication 7, caractérisé en ce que ledit moyen (14) de génération de signal de maximum comporte un comparateur (15) recevant comme premier signal d'entrée la tension dudit condensateur (13d) présent dans ledit moyen de détection (13) de taux moyen de détection et, comme deuxième signal d'entrée, une tension de sortie à forme d'onde triangulaire d'un circuit (16) de génération de signaux triangulaires, et ledit comparateur (15) produit un signal de sortie à forme d'onde rectangulaire dont le rapport cyclique est supérieur de la valeur prédéterminée au taux moyen de conduction dudit moyen de commutation (8).

F I G. I

CONSTANT VOLTAGE SOURCE

INITIAL EXCITING CIRCUIT

ENGINE

# F I G . 2

# F I G . 3

FIG. 4A

POTENTIAL AT POINT Ⓐ IN FIG. I

POTENTIAL AT POINT Ⓑ IN FIG. I

VOLTAGE

V_PL T

FIG. 4B

POTENTIAL AT POINT Ⓒ IN FIG. I

POTENTIAL AT POINT Ⓓ IN FIG. I

VOLTAGE

FIG. 4C

POTENTIAL AT POINT Ⓔ IN FIG. I

VOLTAGE

GENERATOR OFF — GENERATOR ON CONSTANT LIGHT-LOADED — LOAD INCREASED (HEAVY LOADED) — LOAD DECREASED (LIGHT-LOADED)

t₀    t₁    t₂    t₃

EP 0 339 576 B1

# F I G. 5

# FIG. 6

# FIG. 7

F I G .  8

CONSTANT VOLTAGE SOURCE

INITIAL EXCITING CIRCUIT

EP 0 339 576 B1

FIG. 9

ENGINE — 3

CONSTANT VOLTAGE SOURCE

INITIAL EXCITING CIRCUIT

EP 0 339 576 B1

# F I G. 10

REG DUTY = 100 (%)

REG DUTY = 80 (%)

REG DUTY = 60 (%)

REG DUTY = 40 (%)

REG DUTY = 20 (%)

$I$

$I_0$

$N_0$  $N_1$  $N_2$  $N_3$

$Ne$

EP 0 339 576 B1